**Europäisches Patentamt**

**European Patent Office**

**Office européen des brevets**

(19)

(11) Numéro de publication : **0 162 744**
**B1**

(12) # FASCICULE DE BREVET EUROPÉEN

(45) Date de publication du fascicule du brevet :
**02.12.87**

(51) Int. Cl.⁴ : **F 16 D 55/224**

(21) Numéro de dépôt : **85400764.8**

(22) Date de dépôt : **17.04.85**

(54) **Ressort de patins de frein à disque à étrier coulissant, et frein à disque équipé d'un tel ressort.**

(30) Priorité : **26.04.84 FR 8406584**

(43) Date de publication de la demande :
**27.11.85 Bulletin 85/48**

(45) Mention de la délivrance du brevet :
**02.12.87 Bulletin 87/49**

(84) Etats contractants désignés :
**DE GB IT SE**

(56) Documents cités :
**DE-A- 2 345 733**
**DE-A- 2 854 810**
**DE-A- 3 001 800**
**FR-A- 2 318 347**
**GB-A- 2 048 402**
**GB-A- 2 056 601**

(73) Titulaire : **BENDIX France**
**126, rue de Stalingrad**
**F-93700 Drancy (FR)**

(72) Inventeur : **Le Marchand, Claude**
**8 Allée des Tilleuls**
**F-95330 Domont (FR)**
Inventeur : **Gerard, Jean-Louis**
**129 Boulevard Massena**
**F-75013 Paris (FR)**

(74) Mandataire : **Le Moenner, Gabriel et al**
**SERVICE BREVETS BENDIX 44, Rue François 1er**
**F-75008 Paris (FR)**

## Description

La présente invention concerne les ressorts de patins de frein à disque et, plus particulièrement, un ressort de patins pour frein à disque du type à étrier coulissant comportant une voûte surplombant une paire de patins axialement espacés l'un de l'autre, destiné à être interposé entre la voûte de l'étrier et les patins pour solliciter ceux-ci dans une direction radiale opposée à la voûte et à être maintenu à engagement élastique dans une ouverture de la voûte, le ressort étant constitué d'une lame métallique pliée en forme générale de V comportant au moins une paire d'ailes principales destinées à porter par leurs extrémités libres contre des surfaces intérieures de la voûte, reliées par une partie centrale axiale destinée à coopérer en appui avec la paire de patins, et au moins une aile de montage s'étendant à partir de la partie centrale et destinée à être engagée élastiquement dans l'ouverture de la voûte.

Un frein à disque à étrier coulissant muni d'un tel ressort de patins est décrit dans le document DE-A-2 345 733.

Dans ce document, le ressort comporte deux ailes de montage s'étendant immédiatement à partir de la partie centrale pour être engagées dans une ouverture centrale de la voûte de l'étrier, le ressort comprenant deux paires d'ailes principales disposées de part et d'autre des ailes de montage et se raccordant chacune à la partie centrale suivant une zone de relativement faible extension axiale. Un tel agencement présente un certain nombre d'inconvénients dans la mesure où il nécessite notamment une ouverture de montage relativement importante dans une partie centrale de la voûte de l'étrier, affaiblissant ainsi ce dernier et favorisant une tendance à l'ouverture de l'étrier (écartement des parties intérieure extérieure l'une par rapport à l'autre) lors de l'application de forts efforts de freinage, comme c'est généralement le cas dans les véhicules automobiles munis de systèmes de freinage assistés. D'autre part, la longueur de jonction relativement faible entre chaque aile principale et la partie centrale du ressort ne permet pas de garantir l'application d'un effort important de repoussement entre la voûte de l'étrier et les patins. Enfin, le mode de montage par les ailes de montage engagées élastiquement entre les faces transversales en regard de l'ouverture de la voûte de l'étrier ne permet pas de garantir un positionnement précis et fiable du ressort dans le frein.

La présente invention a pour objet de proposer un ressort de patins de frein du type sus-mentionné, de structure simple et robuste, de faibles coûts de fabrication, permettant de garantir un positionnement précis du ressort dans le frein adapté à ce ressort et l'application d'un effort d'écartement important entre la voûte de ressort et les patins du frein.

Pour ce faire, selon une caractéristique de l'invention, l'aile de montage est prévue au voisinage d'une première extrémité axiale du ressort, dans le prolongement, axialement, de l'aile principale adjacente, et comporte, à son extrémité libre, un moyen de crochet s'étendant dans la direction vers la seconde extrémité axiale du ressort, la partie centrale faisant saillie axialement au-delà de l'aile de montage pour constituer ladite première extrémité axiale du ressort.

La présente invention a pour autre objet de proposer un frein à disque du type mentionné ci-dessus, agencé pour être équipé d'un ressort de patins selon l'invention et présentant une rigidité améliorée.

Pour ce faire, selon une autre caractéristique de l'invention, le frein à disque, du type comportant un étrier monté coulissant axialement sur un support fixe et comprenant une partie intérieure, dans laquelle est logé au moins un moteur de frein à piston hydraulique, et une partie extérieure, les deux parties étant reliées par une voûte comportant une ouverture de montage de ressort de patins, la partie intérieure de l'étrier comportant, en regard de la partie extérieure, une face intérieure par rapport à laquelle fait saillie le piston de moteur, est caractérisé en ce que, pour son équipement avec un ressort tel que précédemment défini, l'ouverture de montage est ménagée au voisinage de ladite face intérieure de la partie intérieure de l'étrier, sur laquelle face intérieure prend appui ladite première extrémité axiale du ressort, l'ouverture comportant, dans sa paroi axialement opposée à la face intérieure, un épaulement en retrait avec lequel coopère en engagement de retenue le moyen de crochet de l'aile de montage du ressort.

Avec un tel agencement, l'ouverture de montage du ressort dans la voûte de l'étrier est reportée au voisinage de la partie intérieure massive de l'étrier, l'ouverture pouvant être de faibles dimensions suffisantes pour permettre l'engagement du moyen de crochet de l'aile de montage du ressort. D'autre part, malgré le montage en quelque sorte en porte-à-faux du ressort par une de ses extrémités dans la voûte, l'autre extrémité axiale du ressort est maintenue convenablement plaquée contre la surface intérieure de la voûte du fait de l'appui de la première extrémité axiale du ressort contre la face intérieure de la partie intérieure de l'étrier, cet appui confirmant en verrouillage l'engagement de retenue du moyen de crochet de l'aile de montage dans l'ouverture de la voûte.

D'autres caractéristiques et avantages de la présente invention ressortiront de la description suivante d'un mode de réalisation, donné à titre illustratif mais nullement limitatif, faite en relation avec les dessins annexés, sur lesquels :

La Figure 1 est une vue du dessus, partiellement en coupe, d'un frein à disque à étrier coulissant équipé d'un ressort de patins de frein selon l'invention ;

La Figure 2 est une vue en coupe axiale schématique du frein de la Figure 1 ;

La Figure 3 est une vue du dessus d'un ressort de patins selon l'invention, équipant le frein des Figures 1 et 2 ;

Les Figures 4 et 5 sont des vues en coupe transversale suivant les plans de coupe IV-IV et V-V de la Figure 3, respectivement ; et

La Figure 6 est une vue du côté du ressort de la Figure 3.

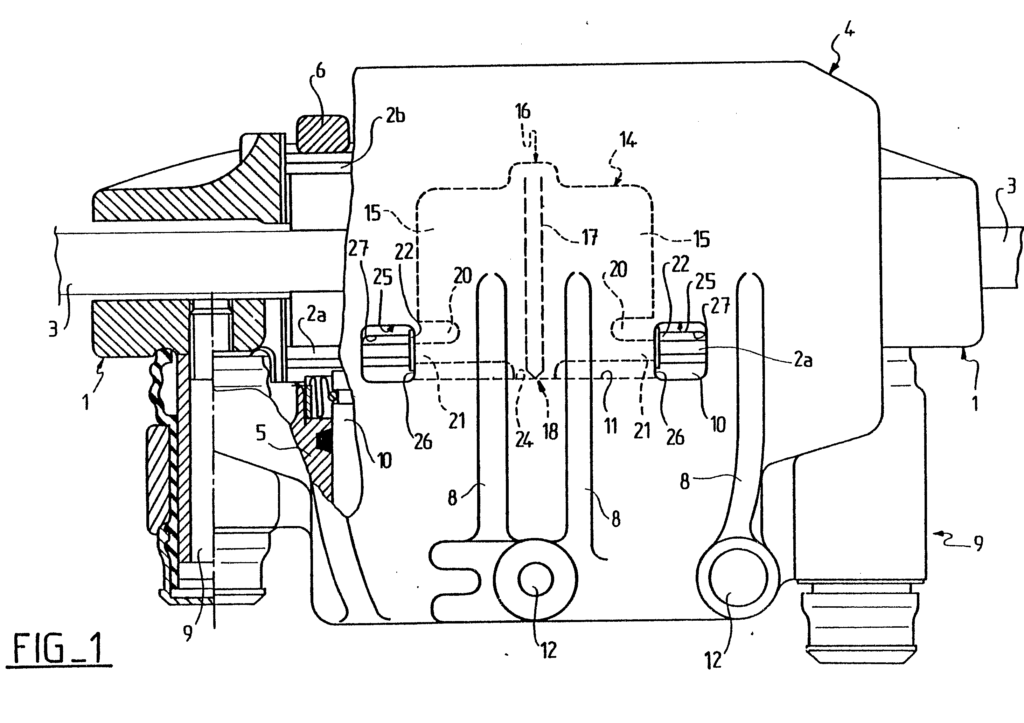

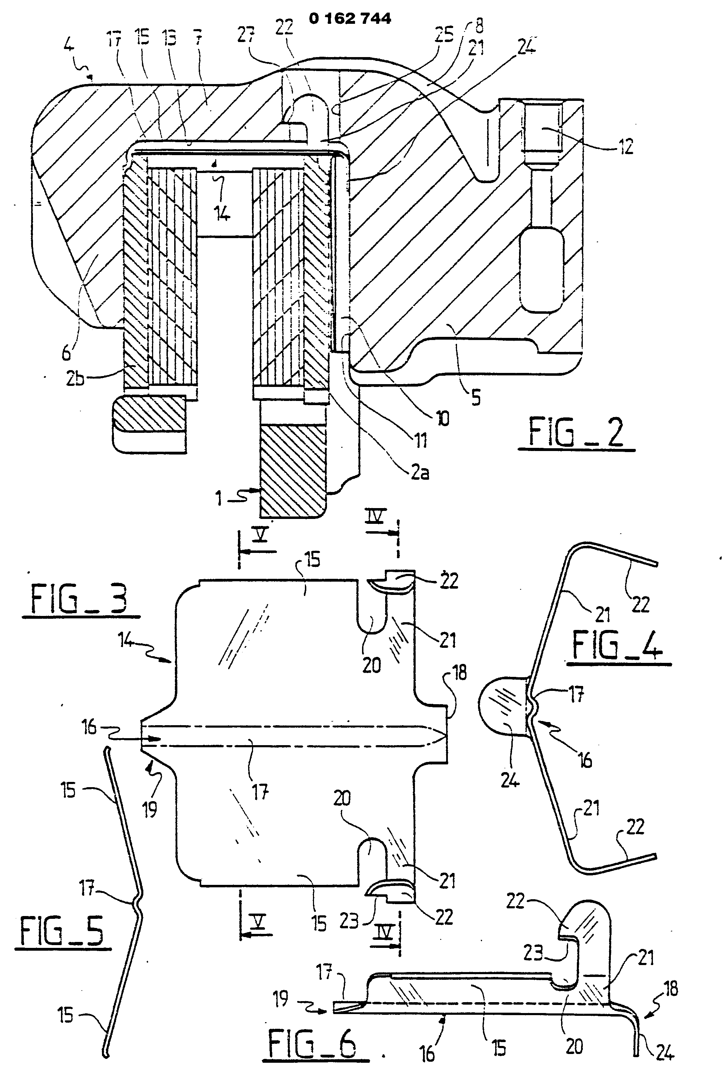

Le frein à disque à étrier coulissant représenté sur les Figures 1 et 2 comprend, de façon conventionnelle, un support fixe 1, dans une ouverture duquel sont montés en ancrage et en coulissement une paire de patins de friction 2a, 2b disposés de part et d'autre d'un disque 3 à freiner. Sur le support fixe 1 est également monté à coulissement un étrier, désigné généralement par la référence 4, comportant une partie intérieure 5 (conformément à l'orientation habituelle d'un tel frein dans une roue de véhicule) renfermant au moins un moteur de frein actionnant directement le patin intérieur 2a, et une partie extérieure ou nez 6, actionnant par réaction le patin extérieur 2b, les deux parties 5 et 6 étant reliées par une voûte d'étrier 7 surplombant les patins 2a, 2b et le disque 3. La partie intérieure 5 et la zone adjacente de la voûte 7 sont avantageusement renforcées par des nervures de rigidification telles que 8.

Dans le mode de réalisation représenté à titre d'exemple sur les Figures 1 et 2, l'étrier 4 est monté à coulissement sur le support fixe 1 au moyen d'une paire de colonnettes 9, solidarisées en l'occurrence au support fixe. Dans ce mode de réalisation, la partie intérieure de l'étrier 5 comporte deux moteurs de frein transversalement espacés l'un de l'autre (la direction axiale étant définie par l'axe du disque 3), dont on voit les pistons 10 qui font saillie axialement, pour solliciter directement le patin intérieur 2a, par rapport à une face intérieure 11 de la partie intérieure 5 de l'étrier en vis-à-vis d'une face intérieure correspondante de la partie extérieure 6 de cet étrier. Les moteurs hydrauliques sont reliés à des systèmes de freinage respectifs par des ouvertures de raccordement 12.

Comme on le voit plus précisément sur les Fig. 2 à 6, entre la surface intérieure 13 de la voûte 7 de l'étrier 4 et les bords supérieurs adjacents des plaques supports des patins 2a et 2b est disposé un ressort 14 que l'on va maintenant décrire en détail. Le ressort 14 est constitué d'une lame métallique élastique pliée en forme générale de V ouvert comportant une paire d'ailes principales 15 s'étendant symétriquement de part et d'autre d'une partie centrale axiale 16 avantageusement pourvue d'un contre-pli de nervurage axial 17. La partie centrale 16 comporte une première extrémité axiale 18 faisant saillie axialement par rapport aux ailes et, avantageusement, une seconde extrémité axiale 19 faisant également saillie axialement par rapport aux ailes. Au voisinage de la première extrémité axiale 18 du ressort une découpe 20, s'étendant depuis l'extérieur vers l'intérieur sur une distance inférieure à la moitié de l'extension transversale de l'aile 15 associée, définit dans cette aile principale 15 (et avantageusement, symétriquement, dans chacune des ailes principales 15, comme représenté) une partie d'aile de montage 21, coplanaire à l'aile principale correspondante 15 et se prolongeant, à son extrémité libre, par une partie d'extrémité s'étendant dans la même direction que l'aile de montage 21 mais rabattue vers l'aile principale opposée pour constituer un crochet 22 présentant un épaulement 23 s'étendant sensiblement axialement sur une portion de l'extension axiale de la découpe 20. Comme on le voit bien sur les Fig. 4 et 6, selon un aspect de l'invention, la partie centrale 16 est prolongée, au niveau de la première extrémité axiale 18 du ressort 14, par une patte 24 rabattue sensiblement perpendiculairement à cette partie centrale 16 dans la direction opposée aux ailes 15 et 21. De préférence, comme on le voit sur les Fig. 5 et 6, les bords latéraux des ailes principales 15 sont légèrement ourlés vers le bas pour faciliter leur coulissement en appui aur la face intérieure 13 de la voûte 7 de l'étrier 4.

En se reportant de nouveau aux Fig. 1 et 2, on voit que la voûte 7 de l'étrier 4 présente, au voisinage de la face intérieure 11 de la partie intérieure 5 de l'étrier, au moins une, typiquement deux ouvertures 25, débouchant avantageusement vers le haut de la voûte de l'étrier, disposées symétriquement de part et d'autre du plan principal de l'étrier pour recevoir les crochets 22 des ailes de montage 21 du ressort 14. Ces crochets 22 sont introduits à force, en écartement, contre les faces axiales adjacentes 26 des ouvertures 25 et enfoncées (du bas vers le haut, comme vu sur la Figure 2) dans ces ouvertures 25 jusqu'à ce que les épaulements 23 des crochets 22 viennent franchir un épaulement en retrait 27 formé dans la paroi de chaque ouverture 25 opposée axialement à la face intérieure 11, ce mouvement de bas en haut du ressort 14 s'accompagnant d'un fléchissement de précontrainte des ailes principales 15 portant en appui, par leurs extrémités libres, contre la face intérieure 13 de la voûte 7. L'engagement du crochet 22 sur l'épaulement 27 est verrouillé par l'appui élastique de la patte 24 contre la face intérieure 11 de la partie intérieure 5 de l'étrier, cet appui induisant par ailleurs sur le ressort 14 un couple maintenant plaquée la zone de la seconde extrémité axiale 19 du ressort contre la voûte et empêchant ainsi par exemple que cette seconde extrémité s'écarte indûment de la face intérieure 13 de la voûte 7, garantissant donc l'application, dans la configuration de fonctionnement du frein, d'un effort d'écartement sensiblement constant entre la voûte 7 de l'étrier 4 et chacun des patins 2a et 2b, plaquant ainsi convenablement ces derniers contre les surfaces d'ancrage et de coulissement du support fixe 1.

Le ressort 14 est réalisé par exemple à partir d'un feuillard d'acier inoxydable d'épaisseur d'environ 0,35 mm et est conformé pour fournir un effort sur les patins compris entre environ 5 et 8 daN.

## Revendications

1. Ressort de patins de frein à disque à étrier coulissant (4) comportant une voûte (7) surplombant une paire de patins (2a, 2b) axialement espacés l'un de l'autre, destiné à être interposé entre la voûte (7) et les patins (2a, 2b) pour solliciter ceux-ci dans une direction radiale opposée à la voûte (7) et à être maintenu à engagement élastique dans une ouverture (25) de la voûte, le ressort (14) étant constitué d'une lame métallique pliée en forme générale de V comportant au moins une paire d'ailes principales (15) destinées à porter par leurs extrémités libres contre une surface intérieure (13) de la voûte (7), reliées par une partie centrale axiale (16) destinée à coopérer en appui avec la paire de patins (2a, 2b), et au moins une aile de montage (21) s'étendant à partir de la partie centrale (16) et destinée à être engagée élastiquement dans l'ouverture (25) de la voûte (7), caractérisé en ce que l'aile de montage (21) est prévue au voisinage d'une première extrémité axiale (18) du ressort, dans le prolongement, axialement, de l'aile principale adjacente (15), et comporte, à son extrémité libre, un moyen de crochet (22) s'étendant dans la direction vers une seconde extrémité axiale (19) du ressort (14), la partie centrale (16) faisant saillie axialement au-delà de l'aile de montage (21) pour constituer ladite première extrémité axiale (18) du ressort.

2. Ressort selon la revendication 1, caractérisé en ce que la partie centrale (16) se termine par une patte (24) rabattue dans la direction opposée à celle des ailes principales (15) et formant ladite première extrémité axiale (18) du ressort.

3. Ressort selon la revendication 1 ou la revendication 2, caractérisé en ce que l'aile de montage (21) est séparée de l'aile principale adjacente (15) par une découpe (20) s'étendant vers l'intérieur sur une partie de l'extension transversale de l'aile principale (15).

4. Ressort selon l'une des revendications 1 à 3, caractérisé en ce que le moyen de crochet (22) est constitué par un prolongement de l'aile de montage (21) s'étendant dans la direction de cette dernière mais rabattue vers l'aile principale opposée (15).

5. Ressort selon l'une des revendications 2 à 4, caractérisé en ce que la patte (24) est sensiblement orthogonale à la partie centrale (16).

6. Ressort selon l'une des revendications précédentes, caractérisé en ce qu'il comporte une paire d'ailes de montage (21) symétriques par rapport à la partie centrale (16) du ressort.

7. Frein à disque, comportant un étrier (4) monté coulissant axialement sur un support fixe (1) et comprenant une partie intérieure (5), dans laquelle est logé au moins un moteur de frein à piston hydraulique (10), et une partie extérieure (6), les deux parties (5, 6) étant reliées par une voûte (7) comportant une ouverture (25) de montage de ressort de patins, la partie intérieure (5) comportant, en regard de la partie extérieure (6), une face intérieure (11) par rapport à laquelle fait saillie axialement le piston (10) du moteur, caractérisé en ce qu'il est équipé d'un ressort (14) selon l'une des revendications précédentes, l'ouverture de montage (25) étant ménagée au voisinage de ladite face intérieure (11), sur laquelle prend appui la première extrémité axiale (18) du ressort, et comportant, dans sa paroi axialement opposée à ladite face intérieure (11), un épaulement en retrait (27) avec lequel coopère en engagement de retenue le moyen de crochet (22) de l'aile de montage (21) du ressort (14).

8. Frein à disque selon la revendication 6 et la revendication 7, caractérisé en ce que l'étrier comporte deux ouvertures de montage (25) transversalement espacées l'une de l'autre.

9. Frein à disque selon la revendication 8, caractérisé en ce que la partie intérieure (5) de l'étrier (4) comprend deux moteurs de frein.

## Claims

1. Spring for the brake pads of a sliding caliper disc brake (4) comprising a bridge (7) straddling a pair of brake pads (2a, 2b) axially spaced from each other and adapted to be interposed between the bridge (7) and the brake pads (2a, 2b) for biasing the latter in a radial direction opposite to the bridge (7) and to be maintained resiliently engaged in an opening (25) of the bridge, the spring (14) being comprised of a metallic leaf bent into a substantial V-shape and comprising at least one pair of main wings (15) adapted to have their free ends engage against an internal surface (13) of the bridge (7) and connected by a central axial portion (16) adapted to cooperate in abutting relationship with the pair of brake pads (2a, 2b), and at least one mounting wing (21) extending from the central portion (16) and adapted to be resiliently engaged in the opening (25) of the bridge (7), characterized in that the mounting wing (21) is provided adjacent to a first axial end (18) of the spring in the axial prolongation of the adjacent main wing (15) and comprising at its free end hook means (22) extending in the direction towards a second axial end (19) of the spring (14), the central portion (16) axially projecting beyond the mounting wing (21) for forming said first axial end (18) of the spring.

2. Spring according to claim 1, characterized in that the central portion (16) is terminated by a strap (24) rebent in the direction opposite to that of the main wings (15) and forming said first axial end (18) of the spring.

3. Spring according to claim 1 or claim 2, characterized in that the mounting wing (21) is separated from the adjacent main wing (15) by a cut-out (20) extending towards the interior along a portion of the transverse extension of the main wing (15).

4. Spring according to any of claims 1 to 3, characterized in that the hook means (22) is comprised of an elongation of the mounting wing (21) extending in the direction of the latter but rebent towards the opposite main wing (15).

5. Spring according to any of claims 2 to 4, characterized in that the strap (24) is substantially perpendicular to the central portion (16).

6. Spring according to any of the preceding claims, characterized in that it comprises a pair of mounting wings (21) symmetrical with respect to the central portion (16) of the spring.

7. Disc brake comprising a caliper (4) mounted for axial sliding movement on a fixed support (1) and comprising an internal portion (5) wherein there is situated at least one hydraulic piston brake motor (10), and an external portion (6), the two portions (5, 6) being connected by a bridge (7) comprising an opening (25) for mounting the brake pad spring, the internal portion (5) comprising, opposite to the external portion (6), an internal face (11) with respect to which the piston (10) of the motor axially projects, characterized in that it is provided with a spring (14) according to any of the preceding claims, the mounting opening (25) being provided adjacent to said internal face (11) against which the first axial end (18) of the spring is engaged, and comprising, in its wall axially opposite to said internal face ends, an offset shoulder (27) with which the hook means (22) of the mounting wing (21) of the spring (14) cooperates in engaging relationship.

8. Disc brake according to claim 6 and claim 7, characterized in that the caliper comprises two mounting openings (25) transversely spaced from each other.

9. Disc brake according to claim 8, characterized in that the internal portion (5) of the caliper (4) comprises two brake motors.


**Patentansprüche**

1. Feder für die Beläge einer Schwimmsattel-Scheibenbremse (4) mit einem Bremssteg (7), der sich über zwei axial beabstandete Bremsbacken (2a, 2b) erstreckt, welche zwischen den Bremssteg (7) und die Bremsbacken (2a, 2b) einsetzbar ist, um diese in einer radialen Richtung entgegengesetzt zum Bremssteg (7) vorzuspannen und in einer Öffnung (25) des Bremssteges elastisch gehalten zu werden, wobei die Feder (14) von einem ungefähr V-förmig gebogenen metallischen Federblatt gebildet wird, das mindestens zwei Hauptarme (15) und mindestens einen Montagearm (21) aufweist, von denen die Hauptarme mit ihren freien Enden an einer Innenfläche (13) des Bremssteges (7) anliegen und durch einen zentralen axialen Abschnitt (16) verbunden sind, welcher mit den beiden Bremsbacken (2a, 2b) zusammenwirkt, und von denen der Montagearm sich vom zentralen Abschnitt (16) aus wegerstreckt und elastisch in die Öffnung (25) des Bremssteges (7) greift, dadurch gekennzeichnet, daß der Montagearm (21) benachbart zu einem ersten axialen Ende (18) der Feder in der axialen Verlängerung des angrenzenden Hauptarmes (15) vorgesehen ist und an seinem freien Ende einen Haken (22) aufweist, der sich in Richtung auf ein zweites axiales Ende (19) der Feder (14) erstreckt, wobei der zentrale Abschnitt (16) axial über den Montagearm (21) vorsteht, um das besagte axiale erste Ende (18) der Feder zu bilden.

2. Feder nach Anspruch 1, dadurch gekennzeichnet, daß der zentrale Abschnitt (16) in einer Klaue (24) endet, die in der zu den Hauptarmen (15) entgegengesetzten Richtung umgebogen ist und das besagte erste axiale Ende (18) der Feder bildet.

3. Feder nach Anspruch 1 oder 2, dadurch gekennzeichnet, daß der Montagearm (21) von dem angrenzenden Hauptarm (15) durch einen Ausschnitt (20) getrennt ist, der sich über einen Teil der Quererstreckung des Hauptarmes (15) nach innen erstreckt.

4. Feder nach einem der Ansprüche 1 bis 3, dadurch gekennzeichnet, daß der Haken (22) von einer Verlängerung des Montagearms (21) gebildet wird, der sich in die Richtung des letzteren erstreckt, jedoch in Richtung auf den entgegengesetzten Hauptarm (15) umgebogen ist.

5. Feder nach einem der Ansprüche 2 bis 4, dadurch gekennzeichnet, daß die Klaue (24) im wesentlichen senkrecht zu dem zentralen Abschnitt (16) verläuft.

6. Feder nach einem der vorhergehenden Ansprüche, dadurch gekennzeichnet, daß sie zwei Montagearme (21) aufweist, die bezüglich des zentralen Abschnittes (16) der Feder symmetrisch sind.

7. Scheibenbremse mit einem Bremssattel (4), der auf einem Bremsträger (1) gleitend gelagert ist und einen äußeren Abschnitt (6) sowie einen inneren Abschnitt (5) aufweist, in welchem mindestens ein hydraulischer Kolbenmotor gelagert ist, wobei die beiden Abschnitte (5, 6) durch einen Bremssteg (7) verbunden sind, welcher eine Öffnung (25) zum Anbringen der Feder für die Bremsbacken aufweist, wobei der innere Abschnitt (5) gegenüber dem äußeren Abschnitt (6) eine Innenfläche (11) besitzt, bezüglich der der Kolben (10) des Bremsmotors axial vorsteht, dadurch gekennzeichnet, daß sie mit einer Feder (14) nach einem der vorhergehenden Ansprüche versehen ist, wobei die Montageöffnung (25) benachbart zu der besagten Innenfläche (11), an der das erste axiale Ende (18) der Feder anliegt, vorgesehen ist und die in ihrer der Innenfläche (11) axial gegenüberliegenden Wand eine rückspringende Schulter (27) aufweist, mit der der Haken (22) des Montagearms (21) der Feder (14) haltend zusammenwirkt.

8. Scheibenbremse nach Anspruch 6 und 7, dadurch gekennzeichnet, daß der Bremssattel zwei Montageöffnungen (25) aufweist, die in Querrichtung zueinander beabstandet sind.

9. Scheibenbremse nach Anspruch 8, dadurch gekennzeichnet, daß der Innenabschnitt (5) des Bremssattels (4) zwei Bremsmotoren aufweist.

FIG_1

0 162 744

FIG_2

FIG_3

FIG_4

FIG_5

FIG_6